# EUROPEAN PATENT SPECIFICATION

(11) **EP 3 040 708 B1**
(45) Date of publication and mention of the grant of the patent: **17.06.2020**
(21) Application number: 14840555.8
(22) Date of filing: 13.08.2014
(51) Int. Cl.: G01N 21/47, G01N 21/55, G01N 21/59

(54) **OPTICAL-CHARACTERISTICS MEASUREMENT DEVICE AND OPTICAL-CHARACTERISTICS MEASUREMENT METHOD**
VORRICHTUNG UND VERFAHREN ZUM MESSEN OPTISCHER EIGENSCHAFTEN
DISPOSITIF ET PROCÉDÉ DE MESURE DE CARACTÉRISTIQUES OPTIQUES

(30) Priority: 30.08.2013 JP 2013179402
(43) Date of publication of application: 06.07.2016
(73) Proprietor: FUJIFILM Corporation, Tokyo 106-8620 (JP)
(72) Inventor: ONO, Shuji, Tokyo 107-0052 (JP)
(74) Representative: Klunker IP Patentanwälte PartG mbB
(86) International application number: PCT/JP2014/071383
(87) International publication number: WO 2015/029787

(56) References cited:
- EP-A2- 2 565 851
- WO-A2-2013/053876
- JP-A- H0 434 337
- JP-A- 2000 187 000
- JP-A- 2002 082 045
- JP-A- 2003 090 715
- JP-A- 2010 537 188
- JP-A- 2013 050 371
- LEVOY M ET AL: "Recording and controlling the 4D light field in a microscope using microlens arrays", JOURNAL OF MICROSCOPY, vol. 235, no. 2, 2009, pages 144-162, XP55250021,
- ARASH TAHERI AND STEVEN R FELDMAN: "Can light-field photography ease focusing on the scalp and oral cavity?", SKIN RESEARCH AND TECHNOLOGY, vol. 19, no. 3, 20 July 2013 (2013-07-20), pages 288-290, XP55122134, ISSN: 0909-752X, DOI: 10.1111/srt.12039

## Description

### BACKGROUND OF THE INVENTION

### 1. Field of the Invention

The present invention relates to an optical-characteristics measurement device according to the preamble of claim 1 and an optical-characteristics measurement method for measuring optical characteristics, such as reflection, transmission, and refraction.

### 2. Description of the Related Art

In a technical field of computer graphics or printing, in general, the optical characteristics of a material are modeled, and the texture of the material is faithfully reproduced based on the modeled optical characteristics. As such modeled material optical characteristics, for example, optical functions, such as a bidirectional reflectance distribution function (BRDF), a bidirectional transmittance distribution function (BTDF), and a bidirectional scattering distribution function, are known.

From the standpoint of accurate and rich-texture rendering or detailed material research, it is important to accurately measure the optical characteristics of a desired material and to faithfully reflect the measurement results in the optical functions, such as the BRDF.

For example, JP2007-508532A discloses a device which measures light intensity of an object. This device includes a light collector system, and a refraction type central portion and a reflection-refraction type peripheral portion of the light collector system generate two beams not intersecting each other from a light beam diffused by the object, whereby improvement of angle resolution, simplification of the device, avoidance of crosstalk, and the like are achieved.

JP2003-090715A discloses an image data measurement device which realistically reproduces a target object freely deformed and operated under an arbitrary viewpoint and a light source. The image data measurement device includes a turntable, a plurality of cameras, a plurality of semi-arcuate arms, a plurality of light sources, and the like, and is configured to automatically image a target object under a plurality of conditions relating to a viewpoint and a light source.

### SUMMARY OF THE INVENTION

As described above, in calculating the optical functions, such as the BRDF, it is effective to irradiate an actual material (sample) with light and to accurately measure light (reflected light, transmitted light, refracted light, or the like) from the material.

However, an exact measurement of light (optical characteristics) from the actual material is very troublesome and requires much labor, and is accompanied by an operation over a comparatively long period of time, and the measurement device itself is likely to be large and to have a complicated configuration.

For example, when measuring reflected light from a sample in order to obtain texture information of a material, it is necessary to irradiate the sample with light from various directions, and since reflected light from the sample travels in various directions, it is necessary to measure reflected light traveling in different directions at various angles. That is, in order to measure the surface characteristics (reflection characteristics) of the sample, it is necessary to two-dimensionally change the irradiation position (irradiation light azimuth) of light on the sample, to two-dimensionally change the measurement position (observation azimuth) of reflected light from the sample, and to two-dimensionally change the measurement position (object observation area) on the sample. Accordingly, for measuring the optical characteristics of the material, it is necessary to perform a measurement while changing "the irradiation position of light", "the measurement position of reflected light", and "the measurement position on the sample" over "the irradiation light azimuth: two dimensions" x "the observation azimuth: two dimension" x "the object observation area: two dimensions" (six dimensions in total). The same applies to not only a case of measuring the reflection characteristics of the sample but also a case of measuring the transmission characteristics, the refraction characteristics, and the like of the sample.

In this way, since a measurement load is large in measuring the optical characteristics of the material, it is preferable to use a method capable of performing a measurement simply and with high accuracy while reducing a load (labor).

However, in the measurement technique of the related art, there is no effective method of satisfying a demand of "a simple and high-accuracy measurement with a light load". In particular, in the measurement device of the related art disclosed in JP2007-508532A or JP2003-090715A, a drive mechanism (mechanical structure) for moving (scanning) the respective units of the measurement device or a measurement target (sample) to a required measurement position is required; however, it is difficult to perform an optical-characteristics measurement accompanied by physical position variation in a short period of time. Furthermore, in a measurement method accompanied by physical variation of the respective units of the measurement device or the sample, a lot of time is required for such physical movement, and arrangement should be performed with equivalent accuracy each time such physical movement is performed; however, precise and accurate movement control is required in order to realize high-accuracy arrangement, and the device itself is large and has a complicated configuration.

An optical-characteristics measurement device according to the preamble of claim 1 is known from LEVOY M ET AL: "Recording and controlling the 4D light field in a microscope using microlens arrays", JOURNAL OF MICROSCOPY, vol. 235, no. 2, 2009, pages 144-162. Further, WO 2013/053876 A2 discloses an optoelectronic system for spectral analysis also having the features of the preamble of claim 1, the same being true for EP 2 565 851 A2.

ARASH TAHERI AND STEVEN R FELDMAN: "Can light-field photography ease focusing on the scalp and oral cavity?", SKIN RESEARCH AND TECHNOLOGY, vol. 19, no. 3, 20 July 2013 (2013-07-20), pages 288-290, ISSN:0909-752X, DOI: 10.1111/srt. 12039 describes an optical-characteristics measurement device comprising a light-field digital camera. In use, a hand-held flashlight unit illuminates a sample.

The invention has been accomplished in consideration of the above-described situation, and an object of the invention is to provide an optical-characteristics measurement device and an optical-characteristics measurement method capable of reducing a measurement load for optical characteristics of a material and performing a simple and high-accuracy measurement in a short period of time.

An aspect of the invention relates to an optical-characteristics measurement device including the features of claim 1.

According to this aspect, light from the sample is guided by the light guide unit and is received by the photoreceptor corresponding to "the position on the sample" and the "traveling direction". With the use of the light reception unit, it is possible to simultaneously measure the intensities (characteristics) of light traveling in various directions from the irradiation position on the sample; therefore, it is possible to reduce a measurement load for the optical characteristics of the sample (material) and to perform a simple and high-accuracy measurement in a short period of time. Furthermore, the entire region to be measured of the sample is irradiated with light by the light irradiation unit at one time, whereby it is possible to simultaneously measure the intensities (characteristics) of light different in "the position on the sample" and the "traveling direction".

For the "light reception unit" used herein, for example, a sensor of a type called a light field sensor can be applied. The light field sensor is constituted of a first optical unit (for example, an imaging lens and a main lens) which guides light from the sample according to "the irradiation position of light on the sample", a second optical unit (for example, a microlens) which is provided according to "the irradiation position of light on the sample" and guides light from the first optical unit according to "the traveling direction of light from the sample", and a light receiver (for example, a pixel sensor) which is provided according to "the traveling direction of light from the sample" and receives light from the second optical unit according to "the irradiation position of light on the sample" and "the traveling direction of light from the sample". In this case, the "light guide unit" of this aspect is constituted of the first optical unit and the second optical unit, and the "photoreceptor" and the "light reception sensor" according to this aspect are constituted of the light receiver.

The optical characteristics of the sample measured by the "optical-characteristics measurement device" are not particularly limited, and for example, a device which measures the reflection characteristics (surface characteristics) or the transmission characteristics (refraction characteristics) of the sample in order to obtain a bidirectional reflectance distribution function (BRDF), a bidirectional transmittance distribution function (BTDF), or a bidirectional scattering distribution function (BSDF) may be the "optical-characteristics measurement device" used herein.

The bidirectional reflectance distribution function (BRDF) is a specialization of a bidirectional scattering surface reflectance distribution function and is a function specific to a reflection position representing how much a light component is reflected in each direction when light is incident at a certain position from a certain direction. The bidirectional transmittance distribution function (BTDF) is a function specific to a transmission position representing how much a light component is transmitted and travels in each direction when light is incident at a certain position from a certain direction. The bidirectional scattering distribution function (BSDF) is a function representing both of the reflection characteristics and the transmission characteristics by combining the bidirectional reflectance distribution function (BRDF) and the bidirectional transmittance distribution function (BTDF).

Accordingly, if the above-described light field sensor (directional sensor) is used in the optical-characteristics measurement device which measures the BRDF, the BTDF, or the BSDF, it is possible to simplify (make compact) the device configuration to simplify labor of a measurement without deteriorating measurement accuracy, and to measure desired optical characteristics (reflection characteristics, transmission/refraction characteristics, and the like) of the sample quickly at low cost.

Light from the sample includes light from a first position of the sample and light from a second position of the sample, light from the first position of the sample includes light traveling in a first direction and light traveling in a second direction, light from the second position of the sample includes light traveling in a third direction and light traveling in a fourth direction, the plurality of photoreceptors include a first photoreceptor corresponding to light from the first position of the sample traveling in the first direction, a second photoreceptor corresponding to light from the first position of the sample traveling in the second direction, a third photoreceptor corresponding to light from the second position of the sample traveling in the third direction, and a fourth photoreceptor corresponding to light from the second position of the sample traveling in the fourth direction, and the light guide unit guides light from the first position of the sample traveling in the first direction to the first photoreceptor, guides light from the first position of the sample traveling in the second direction to the second photoreceptor, guides light from the second position of the sample traveling in the third direction to the third photoreceptor, and guides light from the second position of the sample traveling in the fourth direction to the fourth photoreceptor.

According to this aspect, light is received by the first photoreceptor to the fourth photoreceptor according to "the position (irradiation position) on the sample", and "the traveling direction of light from the sample", and the intensity (optical characteristics) of each light component can be individually obtained.

The irradiation position of light on the sample is not limited to the first position and the second position and may be multiple positions, and the traveling direction of light from the sample is not limited to the first direction to the fourth direction and may be multiple directions. "The first direction and the second direction" and "the third direction and the fourth direction" may be the same or may be different.

The light irradiation unit has a light emission unit, and a half mirror which is arranged between the sample and the light guide unit, guides light from the light emission unit to the sample, and transmits light from the sample.

According to this aspect, the sample is irradiated with light from the light emission unit through the light induction unit, and light is incident on the light reception unit from the sample through the light induction unit. With the use of the light induction unit, it is possible to flexibly arrange the light emission unit, to make the configuration of the optical-characteristics measurement device compact, and to simplify a measurement. The "light induction unit" in this aspect can be constituted of, for example, a half mirror or the like.

Preferably, the light irradiation unit irradiates the sample with parallel light.

According to this aspect, since the sample is irradiated with parallel light, it is possible to simplify a process for corresponding "data of intensity (optical characteristics) of light obtained through the light reception unit" and "the incidence angle of light to the sample" to each other.

Preferably, the light irradiation unit has a light emission unit, a collimate unit which makes light from the light emission unit parallel light, and a light induction unit which is arranged between the sample and the light guide unit, guides the parallel light to the sample, and transmits light from the sample.

According to this aspect, it is possible to make light of the light emission unit parallel light with the collimate unit, and to irradiate the sample with parallel light.

Preferably, the light emission unit includes a plurality of light sources.

According to this aspect, it is possible to irradiate the sample with light from each of a plurality of light sources. Accordingly, when it is necessary to change the irradiation angle of light to the sample, a light source is arranged at each position corresponding to the variable irradiation angle, and a measurement is performed while sequentially changing light sources emitting light, whereby it is possible to perform a measurement without any mechanical movement.

The light guide unit has an imaging lens and a plurality of light guide lenses, the imaging lens is configured to guide light from the sample to different light guide lenses among the plurality of light guide lenses according to the position of light on the sample, and each of the plurality of light guide lenses is configured to guide light guided through the imaging lens to different photoreceptors among the plurality of photoreceptors according to the position and traveling direction of light on and from the sample.

According to this aspect, light from the sample is guided to "the light guide lens corresponding to the position of light on the sample" by the first light guide and is also guided to "the photoreceptor corresponding to the position and traveling direction of light on and from the sample" by each of a plurality of light guide lenses (second light guide). Accordingly, light from the sample is appropriately received by the photoreceptor corresponding to "the position on the sample" and the "traveling direction".

The light reception unit receives light reflected from the sample.

According to this aspect, it is possible to measure the surface characteristics (reflection characteristics) of the sample.

Preferably, the device further includes a light reception unit for transmitted light, wherein the light reception unit for transmitted light has a light sensor array for transmitted light including a plurality of photoreceptors for transmitted light, and a light guide unit for transmitted light which guides light transmitted through the sample to different photoreceptors for transmitted light among the plurality of photoreceptors for transmitted light according to the position and traveling direction of light on and from the sample.

According to this aspect, it is possible to measure the intensities (optical characteristics) of reflected light and transmitted light from the sample, and very high convenience is provided. In particular, the light irradiation unit is shared between the light reception unit for reflected light and the light reception unit for transmitted light, whereby it is possible to simultaneously measure the reflection characteristics and the transmission characteristics of the sample, and there are significant effects on reduction in a measurement load, simplification and reduction of a measurement process, and the like.

Preferably, the light reception unit for reflected light and the light reception unit for transmitted light are arranged at positions sandwiching the sample.

According to this aspect, the device configuration is simplified, and it is possible to simultaneously perform measurements using the light reception unit for reflected light and the light reception unit for transmitted light.

Preferably, the optical-characteristics measurement device further includes an image processing unit which performs a signal process on a light reception signal output from each of the plurality of photoreceptors. For example, it is preferable that the image processing unit performs sorting of the reception signal output from each of the plurality of photoreceptors.

According to this aspect, the signal process of the light reception signal from each photoreceptor is performed by the image processing unit, and it is possible to acquire desired data. The signal process in the image processing unit is not particularly limited, and for example, the image processing unit may perform sorting of the light reception signal (light reception data) to sort and classify the light reception signal in a desired format, or may calculate other kinds of data based on the light reception signal.

Another aspect of the invention relates to an optical-characteristics measurement method including the steps of claim 9.

According to the invention, since light from the sample is guided by the light guide unit and is received by the photoreceptor corresponding to "the position on the sample" and the "traveling direction", it is possible to simultaneously measure the intensities (characteristics) of light traveling in various directions from the irradiation position on the sample. For this reason, it is possible to reduce a measurement load for the optical characteristics of the sample (material) and to perform a simple and high-accuracy measurement in a short period of time.

### BRIEF DESCRIPTION OF THE DRAWINGS

Fig. 1 is a block diagram showing an example of a basic configuration of an optical-characteristics measurement device.
Fig. 2 is a block diagram showing an example of the basic configuration of a light irradiation unit.
Fig. 3 is a block diagram showing an example of the basic configuration of a light reception unit.
Fig. 4 is a side sectional view showing an example of the light reception unit (light field sensor).
Fig. 5 is a side sectional view showing an example of a part of a sensor array.
Fig. 6 is a plan view showing an example of a part of a pixel sensor.
Fig. 7 is a conceptual diagram showing the type of light in a sample, an imaging lens, and a sensor array.
Fig. 8A is a side sectional view of a part of the sensor array for illustrating light guide using a microlens, and shows a light guide state of light from a first position of a sample.
Fig. 8B is a side sectional view of a part of the sensor array for illustrating light guide using a microlens, and shows a light guide state of light from a second position of a sample.
Fig. 8C is a side sectional view of a part of the sensor array for illustrating light guide using a microlens, and shows a light guide state of light from a third position of a sample.
Fig. 9 is a diagram showing the configuration of a BRDF measurement device according to a first embodiment and illustrating irradiation of a sample with light.
Fig. 10 is a diagram showing the configuration of the BRDF measurement device according to the first embodiment and illustrating reception of light (reflected light) from a sample.
Fig. 11 is a side sectional view showing an example of a part of the sensor array, and is a diagram illustrating the correspondence relationship between a reflection direction (an incidence direction of light with respect to a microlens) of light and a light reception pixel sensor.
Fig. 12 is a diagram showing the configuration of a BRDF measurement device according to a second embodiment.
Fig. 13 is a diagram showing the configuration of a BRDF measurement device according to a third embodiment not falling within the scope of the invention.
Fig. 14 is a perspective view showing an example of a light source unit (point light source) in the third embodiment.
Fig. 15 is a diagram showing the configuration of the BRDF measurement device according to the third embodiment and illustrating irradiation of a sample with light.
Fig. 16 is a diagram showing the configuration of the BRDF measurement device according to the third embodiment and illustrating reception of light (reflected light) from a sample.
Fig. 17 is a diagram showing the configuration of a BTDF measurement device according to a fourth embodiment not falling within the scope of the invention.
Fig. 18 is a diagram showing the configuration of a BSDF measurement device according to a fifth embodiment not falling within the scope of the invention.

### DESCRIPTION OF THE PREFERRED EMBODIMENTS

An embodiment of the invention will be described referring to the drawings. Hereinafter, an example where the invention is applied to a device which primarily measures "reflection characteristics (BRDF) of a material (sample)" will be described. However, the invention is not limited thereto, and can be widely applied to an optical-characteristics measurement device which measures light from a sample to measure optical characteristics (BTDF, BSDF, and the like) of a material, and related techniques thereof.

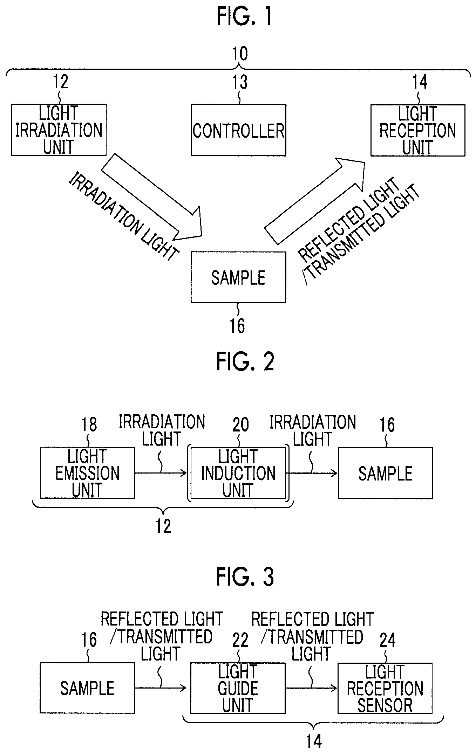

Fig. 1 is a block diagram showing an example of the basic configuration of an optical-characteristics measurement device 10. The optical-characteristics measurement device 10 includes a light irradiation unit 12 which irradiates a sample 16 with light (irradiation light), a light reception unit 14 which receives light (reflected light, transmitted light, or the like) from the sample 16, and a controller 13 which controls the light irradiation unit 12 and the light reception unit 14. The controller 13 controls "light irradiation from the light irradiation unit 12 toward the sample 16" or "light reception in the light reception unit 14", and integrally performs "light emission from a point light source", "reading and storage of a pixel value of a pixel sensor for light reception", and the like.

Fig. 2 is a block diagram showing an example of the basic configuration of the light irradiation unit 12. The light irradiation unit 12 has a light emission unit 18 which emits light (irradiation light), and a light induction unit 20 which guides light from the light emission unit 18 to the sample 16. A light emission aspect in the light emission unit 18 is not particularly limited, and a plurality of light sources may be provided, or an arbitrary type of light source, such as a white light emitting diode (LED), may be used. Although a mirror (half mirror) or the like can be suitably used as the light induction unit 20, the light induction unit 20 may be omitted, and light may be irradiated directly from the light emission unit 18 toward the sample 16 (see a third embodiment to a fifth embodiment described below).

### <Light Field Sensor>

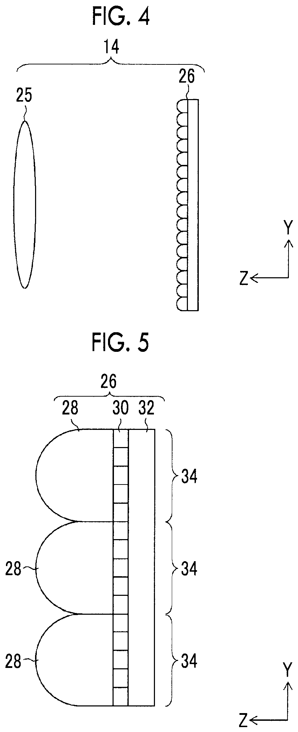

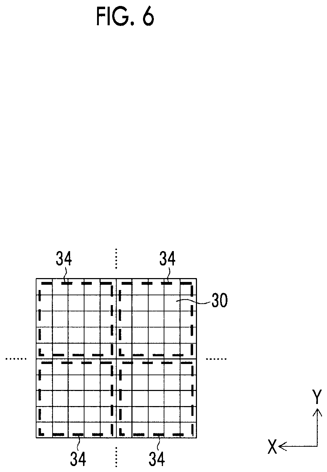

Fig. 3 is a block diagram showing an example of the basic configuration of the light reception unit 14. The light reception unit 14 has a light reception sensor 24 which includes a plurality of photoreceptors (see "pixel sensor 30" of Figs. 5 and 6), and a light guide unit 22 (see "imaging lens 25" of Fig. 4 and "microlens 28" of Fig. 5) which guides light (reflected light, transmitted light, or the like) from the sample 16 to the light reception sensor 24.

In the light reception unit 14 (the light guide unit 22 and the light reception sensor 24) according to each embodiment of the invention, a sensor (for example, a light field sensor) which can detect the two-dimensional intensity and two-dimensional azimuth of light is used. That is, each of a plurality of photoreceptors constituting the light reception sensor 24 corresponds to the position of the sample 16 and the traveling direction of light (reflected light, transmitted light, or the like). The light guide unit 22 guides light (reflected light, transmitted light, or the like) from the sample 16 to different photoreceptors among a plurality of photoreceptors according to "the position (irradiation position) on the sample 16" and "the traveling direction from the sample 16" of light, and makes light be received by the corresponding photoreceptor.

As the purpose of the light field sensor, only 3D imaging (three-dimensional stereoscopic imaging) or refocus imaging has been hitherto known. The optical-characteristics measurement device (BRDF measurement device or the like) of the related art is a device which has a very large mechanical scanning mechanism. In this way, since the light field sensor and the optical-characteristics measurement device of the related art are completely different in the configuration (size) and operation (action), there has hitherto been no idea of connecting both of the field sensor and the optical-characteristics measurement device. However, the inventors have conducted intensive researches and have found that the light field sensor is applied to the optical-characteristics measurement device, thereby reducing a measurement load for optical characteristics with a compact device configuration and performing a simple and high-accuracy measurement in a short period of time.

Fig. 4 is a side sectional view (Y-Z plan view) showing an example of the light reception unit 14 (light field sensor). The light reception unit 14 of this example has an imaging lens 25 and a sensor array 26, and light (reflected light, transmitted light, or the like) from the sample 16 is guided by the imaging lens 25 and forms an image on the sensor array 26.

Fig. 5 is a side sectional view (Y-Z plan view) showing an example of a part of the sensor array 26. The sensor array 26 of this example has a plurality of microlenses 28, a plurality of pixel sensors 30, and a signal transmission unit 32. Light from the sample 16 which reaches the sensor array 26 through the imaging lens 25 is incident in order of the microlens 28 and the pixel sensor 30, and a signal (electric charge) from the pixel sensor 30 is sent from the controller 13 (see Fig. 1) through the signal transmission unit 32.

The controller 13 of this example serves as an image processing unit which receives a light reception signal output from each of a plurality of pixel sensors 30 (photoreceptors) and performs a signal process on the received light reception signal. That is, the controller 13 performs a required signal process to acquire data (image data) in a desired format from the light reception signal (light reception data). The signal process in the controller 13 is not particularly limited, and for example, may perform sorting of the light reception signal, or other kinds of data may be calculated from the light reception signal. In particular, in this example, as described below, the light reception signal output from each of the pixel sensors 30 is associated with "the irradiation position (subject observation area) of irradiation light on the sample 16", "the incidence angle (irradiation light azimuth) of irradiation light to the sample 16", and "the reflection angle (observation azimuth) from the sample 16". Accordingly, the controller 13 temporarily stores the light reception signal from the pixel sensor 30 in a memory (not shown) and sorting the light reception signal stored in the memory based on one of "the irradiation light azimuth, the observation azimuth, and the object observation area", thereby converting the reflection characteristics of the sample 16 to an easy-to-understand format.

Fig. 6 is a plan view (X-Y plan view) showing an example of a part of the pixel sensor 30. The microlenses 28 and the pixel sensors 30 correspond to each other, and in this example, a plurality of pixel sensors 30 (in the example shown in Figs. 5 and 6, 25 pixel sensors 30) correspond to one microlens 28. That is, a position correspondence unit 34 is constituted by one microlens 28 and a plurality of pixel sensors 30 corresponding to the microlens 28, and light incident on the microlens 28 of each position correspondence unit 34 is received by one of a plurality of pixel sensors 30 corresponding to the microlens 28.

In this example, although the relationship of correspondence between the microlenses 28 and the pixel sensors 30 is "the number of microlenses 28:the number of pixel sensors 30 = 1:25", the invention is not limited thereto. For example, a different number (for example, 49 in total of "7 in the X direction and "7 in the Y direction", or the like) of pixel sensors 30 may correspond to one microlens 28.

In the light reception unit 14 having the above configuration, the light guide unit 22 (see Fig. 3) of this example has a first light guide constituted of the imaging lens 25, a second light guide including a plurality of microlenses 28 (light guide lenses), and the light reception sensor 24 (see Fig. 3) has the pixel sensors 30. Each of plurality of microlenses 28 (position correspondence unit 34) corresponds to the position on the sample 16, and the imaging lens 25 guides light from the sample 16 to different microlenses 28 among a plurality of microlenses 28 according to the position of light on the sample 16 and makes light travel toward the corresponding microlens 28.

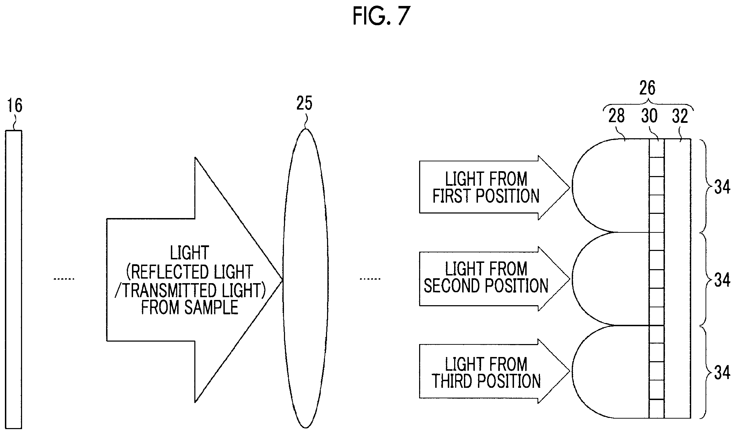

Fig. 7 is a conceptual diagram the type of light on the sample 16, the imaging lens 25, and the sensor array 26. Light (reflected light, transmitted light, or the like) from the sample 16 is incident on the imaging lens 25, and the imaging lens 25 guides light from the sample 16 to the microlens 28 (light guide lens) corresponding to the position of light on the sample 16. For example, light (reflected light, transmitted light, or the like) from a "first position" on the sample 16 includes components traveling in various directions; however, the traveling direction of the light is adjusted by the imaging lens 25, and finally, light is received by the position correspondence unit 34 (the microlens 28 and the pixel sensor 30) corresponding to the "first position". Similarly, in regard to light (reflected light, transmitted light, or the like) from a "second position" and a "third position" on the sample 16, the traveling direction of light is adjusted by the imaging lens 25, and light is received by the position correspondence unit 34 corresponding to the "second position" and the position correspondence unit 34 corresponding to the "third position".

Then, each of the microlenses 28 guides light guided through the imaging lens 25 to different pixel sensors 30 among a plurality of pixel sensors 30 (photoreceptors) according to the position and traveling direction of light on and from the sample 16, and makes light be received by the corresponding pixel sensor 30 (photoreceptor).

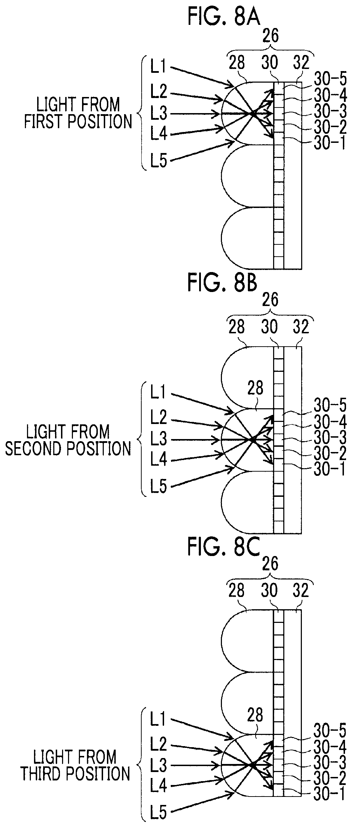

Figs. 8A to 8C are side sectional views of a part of the sensor array 26 illustrating light guide using the microlens 28, Fig. 8A shows the light guide state of light from the first position of the sample 16, Fig. 8B shows the light guide state of light from the second position of the sample 16, and Fig. 8C shows the light guide state of light from the third position of the sample 16.

As described above, light from the first position of the sample 16 is incident on the microlens 28 corresponding to the first position with the imaging lens 25; however, the microlens 28 guides light to the corresponding pixel sensor 30 according to the incidence angle to the microlens 28. For example, as shown in Figs. 8A to 8C, the microlens 28 guides light such that light at an incidence angle L1 is received by a pixel sensor 30-1, light at an incidence angle L2 is received by a pixel sensor 30-2, light at an incidence angle L3 is received by a pixel sensor 30-3, light at an incidence angle L4 is received by a pixel sensor 30-4, and light at an incidence angle L5 is received by a pixel sensor 30-5. Since the incidence angle of light to the microlens 28 is determined according to the incidence angle to the imaging lens 25, the pixel sensor 30 which receives light is determined according to the traveling direction (reflection direction, transmission direction, refraction direction, or the like) of light from the sample 16.

With the use of the light reception unit 14 (the imaging lens 25 and the sensor array 26) having the above configuration, it is possible to allow light from the sample 16 to be received by the light reception sensor 24 (pixel sensor 30) simply and reliably. That is, light from the sample 16 includes light from various positions, and light from each position of the sample 16 includes light traveling in various directions. For example, light from the first position of the sample 16 includes light traveling in the first direction and light traveling in the second direction, and light from the second position of the sample 16 includes light traveling in the third direction and light traveling in the fourth direction. A plurality of pixel sensors (photoreceptors) 30 of the sensor array 26 correspond to "the position on the sample 16" and "the traveling direction of light from the sample 16", and includes, for example, a "first pixel sensor (first photoreceptor) 30" corresponding to light from the first position of the sample 16 traveling in the first direction, a "second pixel sensor (second photoreceptor) 30" corresponding to light from the first position of the sample 16 traveling in the second direction, a "third pixel sensor (third photoreceptor) 30" corresponding to light from the second position of the sample 16 traveling in the third direction, and a "fourth pixel sensor (fourth photoreceptor) 30" corresponding to light from the second position of the sample 16 traveling in the fourth direction. Then, the light guide unit 22 (the imaging lens 25 and the microlens 28) guides light from the sample 16 to the corresponding pixel sensor 30 according to "the position on the sample 16" and "the traveling direction of light from the sample 16", and for example, guides light from the first position of the sample 16 traveling in the first direction to a first pixel sensor 30, guides light from the first position of the sample 16 traveling in the second direction to a second pixel sensor 30, guides light from the second position of the sample 16 traveling in the third direction to a third pixel sensor 30, and guides light from the second position of the sample 16 traveling in the fourth direction to a fourth pixel sensor 30.

In this way, light from the sample 16 is received by the corresponding pixel sensor 30 according to "the position on the sample 16" and "the traveling direction of light from the sample 16". Therefore, according to the optical-characteristics measurement device 10 of this example, it is possible to obtain "two-dimensional information relating to a measurement position (object observation area) on the sample 16" and "two-dimensional information relating to a measurement position (observation azimuth) of the light from the sample 16" at one time through a measurement. That is, with the use of the light reception unit 14 (light field sensor), it is possible to immediately obtain measurement information relating to the object observation area and the observation azimuth for irradiation light through single irradiation of the sample 16 with light without sequentially changing the object observation area and the observation azimuth.

Therefore, according to the optical-characteristics measurement device 10 of this example, "the two-dimensional changes of the measurement position of reflected light and the measurement position on the sample" among "the two-dimensional changes of the irradiation position of the sample 16 with light, the measurement position of reflected light, and the measurement position on the sample" required in the related art is not required, and it is possible to extremely simplify the measurement of the optical characteristics of the material. Furthermore, in regard to light irradiation toward the sample 16 using the light irradiation unit 12, a configuration is made in which the sample 16 can be irradiated with desired light without accompanying physical movement of devices or the sample 16, whereby it is possible to further simplify and accelerate a measurement.

Hereinafter, various embodiments using the above-described light reception unit 14 (light field sensor) will be described. The light reception unit 14 may receive light reflected from the sample 16 (see a first embodiment to a third embodiment), may receive light transmitted through the sample 16 (see a fourth embodiment), or may receive both of reflected light and transmitted light (refracted light) from the sample 16 (see a fifth embodiment).

### <First Embodiment>

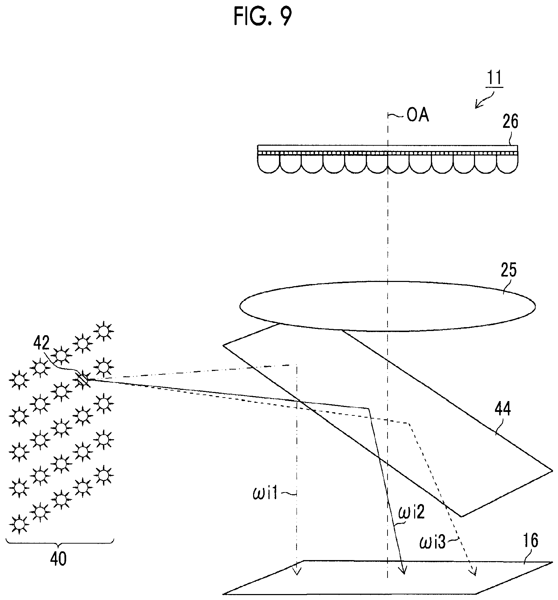

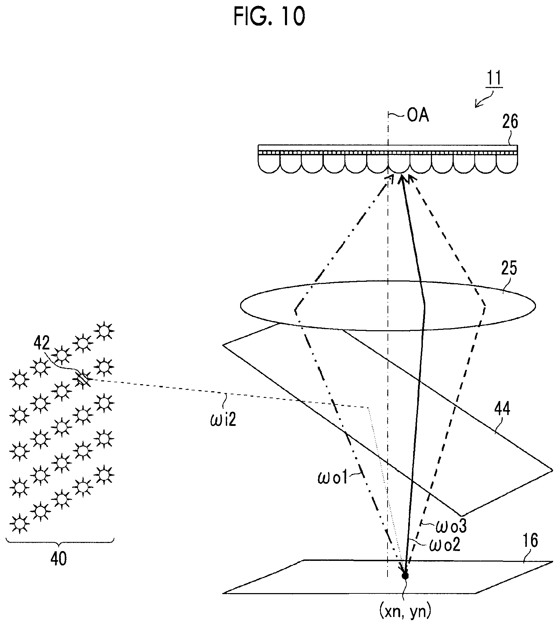

Figs. 9 and 10 show the configuration of a BRDF measurement device 11 according to a first embodiment of the invention, Fig. 9 is a diagram illustrating irradiation of the sample 16 with light, and Fig. 10 is a diagram illustrating reception of light (reflected light) from the sample 16. In Figs. 9 and 10, for ease of understanding, the light irradiation unit 12, the sample 16, and the light reception unit 14 are primarily shown, and the controller 13 (see Fig. 1) is omitted.

The BRDF measurement device 11 (see the "optical-characteristics measurement device 10" of Fig. 1) of this embodiment includes the light reception unit 14 having the imaging lens 25 and the sensor array 26 described above, and the light irradiation unit 12 (see Fig. 1) having a light source unit (light emission unit) 40 and a half mirror (light induction unit) 44.

The light source unit 40 includes a plurality of point light sources 42, and each point light source 42 can be turned on or off (presence or absence of light emission, light emission time, or the like) under the control of the controller 13 (see Fig. 1). Although the position of the light source unit 40 is not particularly limited as long as light from each point light source 42 is appropriately incident on the half mirror 44 and the sample 16, in this embodiment, it is desirable that the light source unit 40 is arranged such that light from the point light source 42 is not incident directly on the sensor array 26.

The half mirror 44 is arranged between the sample 16 and the imaging lens (light guide unit) 25, reflects light from the light source unit 40 (point light source 42) and guides light to the sample 16, and transmits light (reflected light) from the sample 16. Light from the sample 16 transmitted through the half mirror 44 is received by the sensor array 26 (pixel sensor 30) through the imaging lens 25.

The arrangement (position and angle) or the like of the light source unit 40 (point light source 42), the sample 16, the half mirror 44, the imaging lens 25, and the sensor array 26 is adjusted in advance so as to become a desired correlated arrangement. Accordingly, the light source unit 40 and the half mirror 44 are arranged such that a desired position on the sample 16 is irradiated with light at a desired angle through light emission of each point light source 42. The half mirror 44, the imaging lens 25, and the sensor array 26 (microlens 28 and pixel sensor 30) are arranged such that light from the sample 16 is appropriately received by the pixel sensor 30 according to "the reflection position on the sample 16" and the "reflection angle". In order to realize this arrangement, for example, the arrangement of the light source unit 40 (point light source 42), the sample 16, the half mirror 44, the imaging lens 25, and the sensor array 26 may be adjusted on the basis of the optical axis OA of the imaging lens 25.

In the BRDF measurement device 11 having the above configuration, the sample 16 is irradiated with light by the light source unit 40 and the half mirror 44 (light irradiation unit 12) (light irradiation step), and light from the sample 16 is received by the imaging lens 25 and the sensor array 26 (light reception unit 14) (light reception step).

In the light irradiation step, one point light source 42 of the light source unit 40 is made to emit light by the controller 13 (see Fig. 1), light from the point light source 42 is reflected by the half mirror 44, and the sample 16 is irradiated with light. Light emitted from the point light source 42 includes light components (see "ωi1", "ωi2", and "ωi3" of Fig. 9) traveling in various directions, each light component is reflected by the half mirror 44, and the position on the sample 16 is irradiated with the light component according to the traveling direction.

The light component with which each position of the sample 16 is irradiated is reflected and diffused in various directions according to the surface characteristics (reflection characteristics) of the irradiation position. Fig. 10 shows, as an example, reflection components ωo1, ωο2, and ωο3 of light when a certain position (xn, yn) of the sample 16 is irradiated with a light component ωi2 emitted from the point light source 42 in a certain traveling direction.

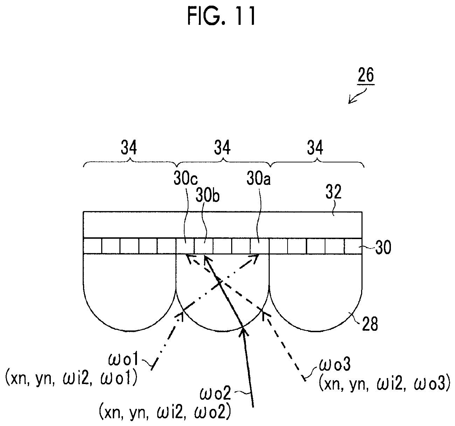

The light component reflected at each position of the sample 16 is transmitted through the half mirror 44 and is received by the sensor array 26 through the imaging lens 25 (light reception step), and each light component is incident on the microlens 28 (position correspondence unit 34) according to the reflection position (irradiation position) on the sample 16 (see Fig. 7). Then, each light component incident on the microlens 28 is received by the pixel sensor 30 according to "the reflection angle from the sample 16" (see Figs. 8A to 8C), and for example, as shown in Fig. 11, the reflection component ωo1 of light from the sample 16 is received by a pixel sensor 30a, the reflection component ωο2 is received by a pixel sensor 30b, and the reflection component ωο3 is received by a pixel sensor 30c.

As described above, each of the pixel sensors 30 constituting the sensor array 26 is associated with "the reflection position on the sample 16" and "the reflection angle from the sample 16" from the beginning. Accordingly, labor to change "the measurement position (object observation area) on the sample" and "the measurement position (observation azimuth) of reflected light from the sample" at the time of a measurement is not required, and it is possible to simultaneously measure "reflected light information (optical information) different in object observation area and observation azimuth".

The light irradiation step and the light reception step are repeated while two-dimensionally changing the irradiation position of light on the sample by sequentially switching and turning on the point light sources 42 of the light source unit 40, whereby it is possible to accurately measure intensity information (optical characteristics) of the light components based on "the object observation area, the irradiation light azimuth, and the observation azimuth (see (xn, yn, ωi2, and ωo1 to ωο3) of Fig. 10)".

The pixel sensors 30 are controlled by the controller 13, and the intensity information (sensor detection value) of the light component measured by each pixel sensor 30 is stored in a memory (not shown) along with information regarding "the object observation area, the irradiation light azimuth, and the observation azimuth" in each measurement (each time the point light sources 42 are switched).

As described above, according to this embodiment, two-dimensional displacement information of the "observation azimuth" of "the irradiation light azimuth, the observation azimuth, and the object observation area" constituting the basis of the measurement of the BRDF (reflection characteristics) is simultaneously acquired by the sensor array 26 (light field sensor) arranged in a fixed manner. The two-dimensional displacement information of the "object observation area" is simultaneously acquired by the imaging lens 25 and the sensor array 26 arranged in a fixed manner. In addition, the two-dimensional displacement of the "irradiation light azimuth" is acquired by sequentially switching the point light sources 42 emitting light in the light source unit 40 and appropriately performing light source blinking and scanning.

Therefore, according to the BRDF measurement device 11 of this embodiment, it is possible to appropriately obtain light reflection information (optical characteristics) different in "the irradiation light azimuth, the observation azimuth, and the object observation area" without performing mechanical movement driving. While an actual measurement depends on the capability of the BRDF measurement device 11, a series of processes of "light emission of the individual point light source 42", "light reception in the sensor array 26 (pixel sensor 30)", and "storage of the sensor detection value in the memory" is performed instantaneously. For this reason, the time required for measuring the reflection characteristics (optical characteristics) of the sample 16 by the BRDF measurement device 11 of this embodiment is substantially only the time of scanning and blinking of the point light source 42 in the light source unit 40. Accordingly, the BRDF measurement device 11 of this embodiment can perform an overwhelmingly higher speed measurement compared to the related art method in which mechanical movement driving with regard to each of "the irradiation light azimuth, the observation azimuth, and the object observation area" is required.

### <Second Embodiment>

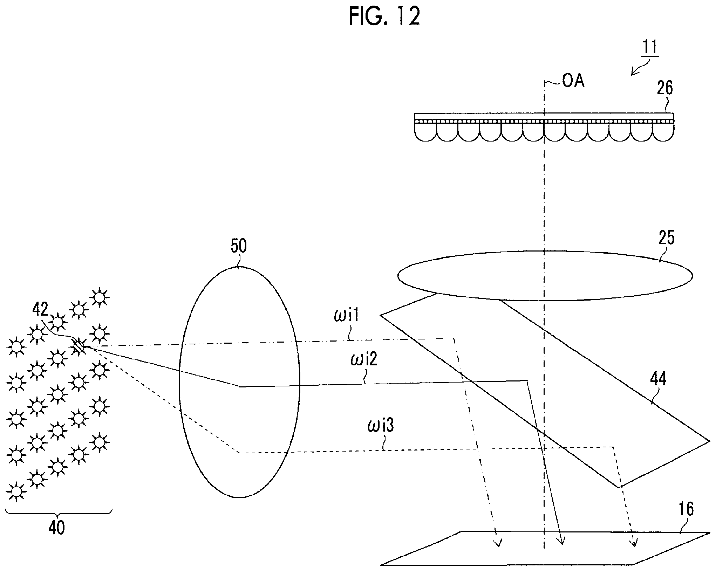

Fig. 12 shows the configuration of a BRDF measurement device 11 according to a second embodiment of the invention, and in particular, is a diagram illustrating irradiation of the sample 16 with light.

In this embodiment, the same or similar configurations as those in the forgoing first embodiment are represented by the same reference numerals, and detailed description thereof will not be repeated.

A light irradiation unit 12 (see Fig. 1) of this embodiment further includes a collimating lens (collimate unit) 50 which makes light from the light source unit 40 (point light sources 42) parallel light, and irradiates the sample 16 with parallel light.

That is, while light emitted from each point light source 42 travels in various directions, light traveling in various directions is collimated (parallelized) by the collimating lens 50, whereby it is possible to make light incident on the half mirror 44 and the sample 16 parallel light (see "coil", "ωi2", and "ωi3" of Fig. 12).

Irradiation light toward the sample 16 is made parallel light, whereby in a single measurement (a measurement using light emission from one point light source 42), it is possible to make the irradiation angle (incidence angle) of light to the sample 16 common. The irradiation angle of light in the single measurement (light emission from one point light source 42) is made common and uniform, whereby it is possible to simplify a data process in a post-stage image processing unit (see the controller 13 of Fig. 1). For example, it is possible to reduce a processing load of various processes (various processes in the controller 13), such as a process for corresponding information regarding "the irradiation light azimuth, the observation azimuth, and the object observation area" to measurement data (reflected light intensity), and a process for sorting data associated with the "irradiation light azimuth".

### <Third Embodiment>

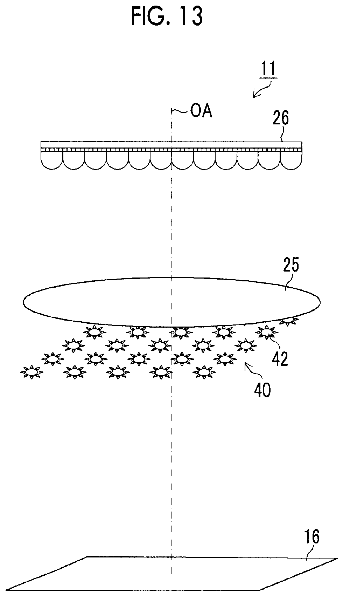

Fig. 13 shows the configuration of a BRDF measurement device 11 according to a third embodiment not falling within the scope of the invention.

In this embodiment, the same or similar configurations as those in the forgoing first embodiment are represented by the same reference numerals, and detailed description thereof will not be repeated.

A light irradiation unit 12 (see Fig. 1) of this embodiment does not have a half mirror (light induction unit) 44, and the light source unit 40 (point light sources 42) is arranged between the sample 16 and the imaging lens 25 (light guide unit). That is, the sample 16 is directly irradiated with light from each point light source 42, and light (reflected light) from the sample 16 reaches the sensor array 26 through the gap between the point light sources 42 (light source array). Accordingly, in this embodiment, light propagates in order of the point light sources 42, the sample 16, the imaging lens 25, and the sensor array 26 (the microlenses 28 and the pixel sensors 30).

Although the position of the light source unit 40 of this example is not particularly limited as long as the light source unit 40 is arranged between the imaging lens 25 and the sample 16, the position of the light source unit 40 is preferably a position where the entire measurement surface of the sample 16 can be irradiated with light from each point light source 42 with uniform intensity, and for example, the light source unit 40 may be arranged closest to the imaging lens 25 (so as to be bonded to the lens surface of the imaging lens 25).

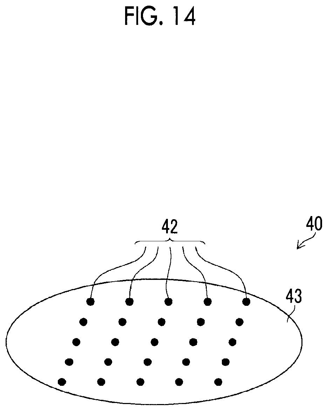

Fig. 14 is a perspective view showing an example of the light source unit 40 (the point light sources 42) according to third embodiment. In the light source unit 40 of Fig. 14, the point light sources 42 arranged in a two-dimensional manner are held by a support 43, a light shield member is provided in a portion of the support 43 where light propagates from each point light source 42 toward the sensor array 26, and a portion other than the light shield portion is constituted of a light transmissive member (for example, a transparent member). The wiring of each point light source 42 is preferably constituted of a light transmissive member, and for example, a transparent conductive material can be preferably used.

The light source unit 40 has light radiation directivity such that light from each point light source 42 travels toward the sample 16, and light from the point light source 42 is not incident directly on the sensor array 26 (the microlenses 28 and the pixel sensors 30). For example, a light shield member is arranged between each point light source 42 and the imaging lens 25, whereby it is possible to prevent light from traveling from each point light source 42 to the sensor array 26 (pixel sensors 30). For example, a mesh-like diaphragm member having a plurality of apertures may be s provided between the light source unit 40 and the imaging lens 25, such that light traveling from each point light source 42 to the sensor array 26 is shielded by the diaphragm member, and light (reflected light) from the sample 16 passes through the apertures of the diaphragm member and is incident on the sensor array 26 (pixel sensors 30). With the use of the diaphragm member, it is possible to simply secure "shielding of light from the point light source 42 toward the sensor array 26" and "the propagation path of light from the sample 16 to the sensor array 26".

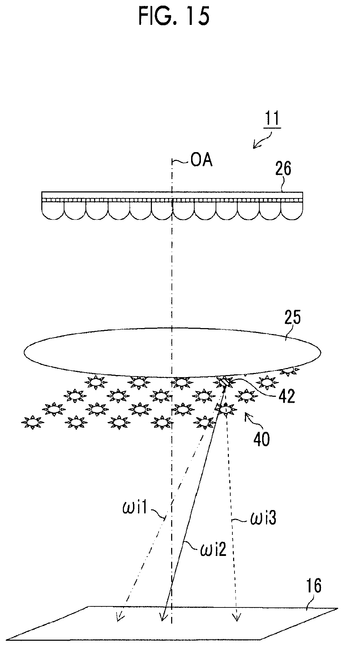

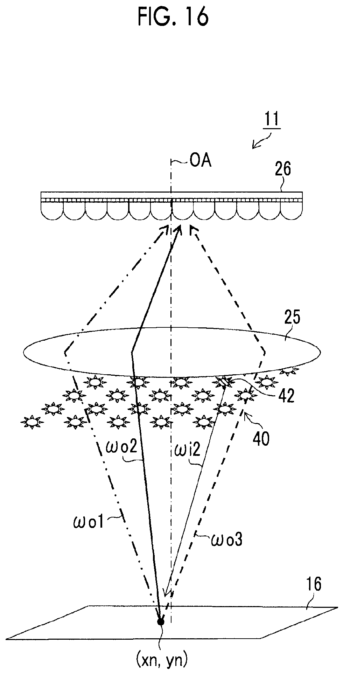

In the BRDF measurement device 11 of this embodiment, as shown in Fig. 15, the sample 16 is directly irradiated with light from each point light source 42 of the light source unit 40 (light irradiation step). As shown in Fig. 16, light (reflected light) from the sample 16 is incident on the imaging lens 25 through the gap between the point light sources 42 of the light source unit 40 and is guided to the sensor array 26. As in the first embodiment described above, reflected light is guided to the position correspondence unit 34 (microlens 28) according to "the irradiation position (reflection position) on the sample 16" by the imaging lens 25, or reflected light is guided to the pixel sensor 30 according to "the traveling direction (reflection direction) from the sample 16" by the microlens 28.

As described above, in the BRDF measurement device 11 of this embodiment, it is possible to obtain light reflection information (optical characteristics) different in "the irradiation light azimuth, the observation azimuth, and the object observation area" without performing mechanical movement driving. In particular, according to this embodiment, since it is not necessary to provide a light induction unit, such as the half mirror 44 (the first embodiment, see Fig. 10) for guiding light from the light source unit 40 (point light sources 42) to the sample 16, it is possible to make the BRDF measurement device 11 compact and to perform a measurement of optical characteristics simply at low cost.

Although the above-described light source unit 40 (point light sources 42) is arranged between the imaging lens 25 and the sample 16 close to the imaging lens 25 (see Figs. 13 to 16), the arrangement form of the light source unit 40 (point light sources 42) is not particularly limited as long as the sample 16 can be directly irradiated with light. For example, the light source unit 40 may be provided in a dome shape (hemispherical shape), or the point light sources 42 may be arranged so as to surround the sample 16 between the imaging lens 25 and the sample 16.

### <Fourth Embodiment>

In the respective embodiments described above, although an example where the invention is applied to the bidirectional reflectance distribution function (BRDF) measurement device 11 has been described, in this embodiment, a bidirectional transmittance distribution function (BTDF) measurement device 54 will be described. That is, although the light reception unit 14 (the imaging lens 25 and the sensor array 26) of the first embodiment to the third embodiment described above receives reflected light from the sample 16, the light reception unit 14 (the imaging lens 25 and the sensor array 26) of this embodiment receives transmitted light (refracted light) from the sample 16.

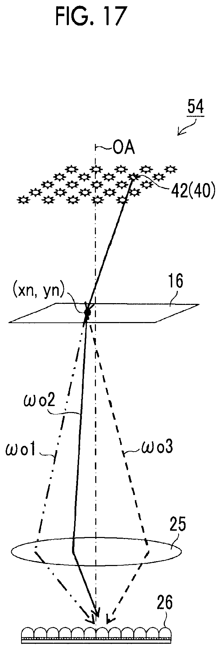

Fig. 17 shows the configuration of a BTDF measurement device 54 according to a fourth embodiment not falling within the scope of the invention.

In this embodiment, the same or similar configurations as those in the forgoing third embodiment are represented by the same reference numerals, and detailed description thereof will not be repeated.

As in the third embodiment describe above, the BTDF measurement device 54 (see the "optical-characteristics measurement device 10" of Fig. 1) of this embodiment includes a light source unit 40 (point light sources 42), an imaging lens 25, and a sensor array 26 (light field sensor). However, the "light source unit 40 (point light sources 42)" and "the imaging lens 25 and the sensor array 26 (light field sensor)" are arranged at positions sandwiching the sample 16.

In the BTDF measurement device 54 of this embodiment, the sample 16 is directly irradiated with light from each point light source 42 of the light source unit 40 (light irradiation step), and transmitted light from the sample 16 is received by the sensor array 26 through the imaging lens 25 (light reception step). A light component with which each position of the sample 16 is irradiated is dispersed in various directions according to the transmission characteristics (refraction characteristics) of the irradiation position (see "ωo1", "ωο2", and "ωο3" of Fig. 17). Fig. 17 shows, as an example, the transmissive components cool, ωο2, and ωο3 of light when a certain position (xn, yn) of the sample 16 is irradiated with a light component emitted from the point light source 42 in a certain traveling direction.

The light component transmitted through the sample 16 is guided by the imaging lens 25 and the sensor array 26 (microlens 28) and is received by the corresponding pixel sensor 30 of the sensor array 26 according to "the irradiation position on the sample 16" and "the traveling direction after transmitted through the sample 16". That is, the light component transmitted through the sample 16 is guided to the microlens 28 (position correspondence unit 34) of the sensor array 26 corresponding to "the irradiation position on the sample 16" by the imaging lens 25. The light component reached the microlens 28 is guided to the pixel sensor 30 corresponding to "the traveling direction after transmitted through the sample 16" by the microlens 28.

According to this embodiment, it is possible to simultaneously acquire two-dimensional displacement information of the "observation azimuth" by the sensor array 26 (light field sensor) arranged in a fixed manner, and to simultaneously acquire two-dimensional displacement information of the "object observation area" by the imaging lens 25 arranged in a fixed manner. Furthermore, it is possible to acquire two-dimensional displacement information of the "irradiation light azimuth" by sequentially switching the point light sources 42 emitting light in the light source unit 40 arranged in a fixed manner and appropriately performing light source blinking and scanning. In this way, in the BTDF measurement device 54 of this embodiment, it is possible to obtain light transmission information (light refraction information) different in "the irradiation light azimuth, the observation azimuth, and the object observation area" without mechanical movement driving, and to reduce a measurement load and to perform a simple and high-accuracy measure in a short period of time compared to the related art method.

In the above-described example, although a case where the sample 16 is directly irradiated with light from the light source unit 40 (point light sources 42) has been described (see Fig. 17), the arrangement form of the light source unit 40 (point light sources 42) is not particularly limited. Accordingly, the light source unit 40 (point light sources 42) may be arranged as in the first embodiment and the second embodiment described above, light from each point light source 42 may be guided by the half mirror (light induction unit) 44 (see Fig. 9 or the like), or light from each point light source 42 may be made parallel light by the collimating lens (collimate unit) 50 (see Fig. 12).

### <Fifth Embodiment>

In the respective embodiments described above, although an example of the bidirectional reflectance distribution function (BRDF) measurement device 11 and the bidirectional transmittance distribution function (BTDF) measurement device 54 has been described, the disclosure may be applied to a bidirectional scattering distribution function (BSDF) measurement device 56 in which both devices are combined.

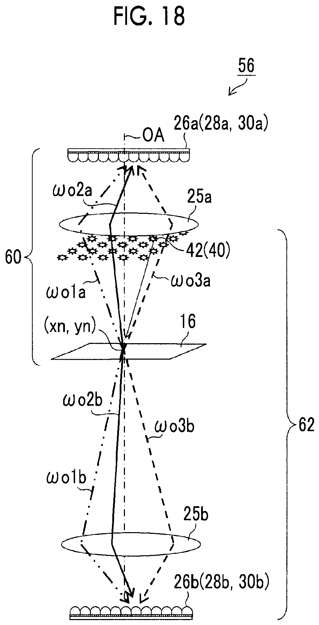

Fig. 18 shows the configuration of the BSDF measurement device 56 according to a fifth embodiment not falling within the scope of the invention.

In this embodiment, the same or similar configurations as those in the forgoing third and fourth embodiments are represented by the same reference numerals, and detailed description thereof will not be repeated.

The BSDF measurement device 56 (see the "optical-characteristics measurement device 10" of Fig. 1) of this embodiment has a configuration in which the BRDF measurement device 11 of the third embodiment and the BTDF measurement device 54 of the fourth embodiment described above are combined. That is, the BSDF measurement device 56 includes a BRDF measurement unit 60 and a BTDF measurement unit 62. While each of the BRDF measurement unit 60 and the BTDF measurement unit 62 includes a light irradiation unit (see reference numeral "12" of Fig. 1) and a light reception unit (see reference numeral "14" of Fig. 1), the light source unit 40 (point light sources 42) constituting the light irradiation unit is shared by the BRDF measurement unit 60 and the BTDF measurement unit 62.

That is, the light reception unit of the BSDF measurement device 56 of this embodiment includes a light reception unit for reflected light (see reference numerals "25a" and "26a" of Fig. 18) of the BRDF measurement unit 60 and a light reception unit for transmitted light (see reference numerals "25b" and "26b" of Fig. 18) of the BTDF measurement unit 62. The light reception unit for reflected light and the light reception unit for transmitted light are arranged at positions sandwiching the sample 16, the light reception unit for reflected light has an imaging lens 25a and a sensor array 26a, and the light reception unit for transmitted light has an imaging lens 25b and a sensor array 26b. Accordingly, the light reception unit for reflected light has a pixel sensor 30a (light reception sensor for reflected light) including a plurality of photoreceptors for reflected light, and the imaging lens 25a and a microlens 28a (light guide unit for reflected light) which guide light reflected from the sample 16 to the pixel sensor 30a. Similarly, the light reception unit for transmitted light has a pixel sensor 30b (light reception sensor for transmitted light) including a plurality of photoreceptors for transmitted light, and the imaging lens 25b and a microlens 28b (light guide unit for transmitted light) which guide light transmitted from the sample 16 to the pixel sensor 30b.

Each of the photoreceptors for reflected light (pixel sensor 30a) corresponds to the position of the sample 16 and the traveling direction of reflected light. The light guide unit for reflected light (the imaging lens 25a and the microlens 28a) guides light reflected from the sample 16 to different photoreceptors for reflected light among a plurality of photoreceptors for reflected light (pixel sensor 30a) according to "the position (irradiation position) on the sample 16" and the "traveling direction", and makes light be received by the corresponding photoreceptor for reflected light. Similarly, each of the photoreceptors for transmitted light (pixel sensor 30b) corresponds to the position of the sample 16 and the traveling direction of transmitted light, and the light guide unit for transmitted light (the imaging lens 25b and the microlens 28b) guides light transmitted through the sample 16 to different photoreceptors for transmitted light among a plurality of photoreceptors for transmitted light (pixel sensor 30b) according to "the position on the sample 16" and the "traveling direction" of light, and makes light be received by the corresponding photoreceptor for transmitted light.

The BSDF measurement device 56 of this embodiment can measure a plurality of types of optical characteristics including the reflection characteristics and the transmission characteristics of the sample 16 with a single device, and can provide very high convenience. In particular, the light irradiation unit (light source unit 40 (point light sources 42)) is shared by the BRDF measurement unit 60 and the BTDF measurement unit 62, whereby it is possible to simultaneously acquire both of the reflection characteristics and the transmission characteristics by turning-on each point light source 42 at one time, to realize a simple and high-accuracy measurement of both characteristics, and to reduce a measurement load to effectively reduce a measurement time.

In the above-described example, while the sample 16 is directly irradiated with light from the light source unit 40 (point light sources 42) has been described (see Fig. 18), the arrangement form of the light source unit 40 (point light sources 42) is not particularly limited. Accordingly, the light source unit 40 (point light sources 42) may be arranged as in the first embodiment and the second embodiment described above, light from each point light source 42 may be guided by the half mirror (light induction unit) 44 (see Fig. 9 or the like), or light from each point light source 42 may be made parallel light by the collimating lens (collimate unit) 50 (see Fig. 12).

The above-described embodiments may be appropriately combined, and the invention may be applied to devices and methods other than the devices and the methods described in the above-described embodiments.

For example, in the above-described embodiments, although an example where the entire surface of the sample 16 is irradiated with light from the light irradiation unit 12 (the light source unit 40 and the point light sources 42) has been described, for example, a part (one point) of the sample 16 may be irradiated with light from the light irradiation unit 12 and light from the irradiation place may be received by the light reception unit 14, whereby the optical characteristics may be acquired individually at the irradiation place.

The invention can be applied to an optical-characteristics measurement method (a reflected light measurement method, a transmitted light measurement method, and the like) which has the above-described processing steps (processing procedure), a program which causes a computer to execute the above-described processing steps (processing procedure), a computer-readable recording medium (non-transitory recording medium) having the program recorded thereon, or a computer on which the program is installable.

The scope of the invention is defined by the appended claims.

### Explanation of References

10: optical-characteristics measurement device, 11: BRDF measurement device, 12: light irradiation unit, 13: controller, 14: light reception unit, 16: sample, 18: light emission unit, 20: light induction unit, 22: light guide unit, 24: light reception sensor, 25: imaging lens, 26: sensor array, 28: microlens, 30: pixel sensor, 32: signal transmission unit, 34: position correspondence unit, 40: light source unit, 42: point light source, 43: support, 44: half mirror, 50: collimating lens, 54: BTDF measurement device, 56: BSDF measurement device, 60: BRDF measurement unit, 62: BTDF measurement unit

## Claims

1. An optical-characteristics measurement device (10; 11) comprising:
a light irradiation unit (12) for irradiating a sample (16) with light, the light irradiation unit including a light emission unit (40); and
a light reception unit (14) for receiving light reflected from the sample;
wherein the light reception unit (14) has a light sensor array (26) including a plurality of photoreceptors (30), and a light guide unit (22) configured to guide light from the sample (16) to different photoreceptors (30) among the plurality of photoreceptors (30) according to the position and traveling direction of light on and from the sample (16),
wherein the light guide unit (22) has an imaging lens (25) and a plurality of light guide lenses (28),
the imaging lens (25) is configured to guide light from the sample (16) to different light guide lenses (28) among the plurality of light guide lenses (28) according to the position of light on the sample (16), and
each of the plurality of light guide lenses (28) is configured to guide light guided through the imaging lens (25) to different photoreceptors (30) among the plurality of photoreceptors (30) according to the position and traveling direction of light on and from the sample (16),
wherein light from the sample (16) includes light from a first position of the sample (16) and light from a second position of the sample (16),
light from the first position of the sample (16) includes light traveling in a first direction and light traveling in a second direction,
light from the second position of the sample (16) includes light traveling in a third direction and light traveling in a fourth direction,
the plurality of photoreceptors (30) include a first photoreceptor, a second photoreceptor, a third photoreceptor, and a fourth photoreceptor, and
the light guide unit (22) is configured to guide light from the first position of the sample traveling in the first direction to the first photoreceptor (30), light from the first position of the sample traveling in the second direction to the second photoreceptor, light from the second position of the sample traveling in the third direction to the third photoreceptor, and light from the second position of the sample traveling in the fourth direction to the fourth photoreceptor,
**characterized in that** the device further comprises a half mirror (44) which is arranged between the sample (16) and the light guide unit (22) and configured to guide light from the light emission unit (40) to the sample (16) and transmit light from the sample (16).

2. The optical-characteristics measurement device according to claim 1,
wherein the light irradiation unit (12) is configured to irradiate the sample (16) with parallel light.

3. The optical-characteristics measurement device according to claim 2,
wherein the light irradiation unit (12) includes a collimate unit (50) configured to make light from the light emission unit (40) parallel light, and
wherein said half mirror (44) is configured to guide the parallel light to the sample (16).

4. The optical-characteristics measurement device according to any one of claims 1 to 3,
wherein the light emission unit (40) includes a plurality of light sources (42).

5. The optical-characteristics measurement device according to any one of claims 1 to 4,
wherein the device further includes a light reception unit for transmitted light, wherein the light reception unit for transmitted light has a light sensor array for transmitted light including a plurality of photoreceptors for transmitted light, and a light guide unit : configured to guide light transmitted through the sample to different photoreceptors for transmitted light among the plurality of photoreceptors for transmitted light according to the position and traveling direction of light on and from the sample.

6. The optical-characteristics measurement device according to claim 5,
wherein the light reception unit for reflected light and the light reception unit for transmitted light are arranged at positions sandwiching the sample.

7. The optical-characteristics measurement device according to any one of claims 1 to 6, further comprising:
an image processing unit configured to perform a signal process on a light reception signal output from each of the plurality of photoreceptors (30).

8. The optical-characteristics measurement device according to claim 7, wherein the image processing unit is configured to perform sorting of the light reception signal output from each of the plurality of photoreceptors.

9. An optical-characteristics measurement method comprising:
a step of causing a light irradiation unit (12) including a light emission unit (40) to irradiate a sample (16) with light; and
a step of causing a light reception unit (14) to receive light reflected from the sample,
wherein the light reception unit (14) has a light sensor array (26) including a plurality of photoreceptors (30), and a light guide unit (22) which guides light from the sample (16) to the light sensor array (26), and
the light guide unit (22) guides light from the sample (16) to different photoreceptors (30) among the plurality of photoreceptors (30) according to the position and traveling direction of light on and from the sample (16),
wherein the light guide unit (22) has an imaging lens (25) and a plurality of light guide lenses (28),
the imaging lens (25) guides light from the sample (16) to different light guide lenses (28) among the plurality of light guide lenses (28) according to the position of light on the sample (16), and
each of the plurality of light guide lenses (28) guides light guided through the imaging lens (25) to different photoreceptors (30) among the plurality of photoreceptors according to the position and traveling direction of light on and from the sample (16),
wherein light from the sample (16) includes light from a first position of the sample (16) and light from a second position of the sample (16),
light from the first position of the sample (16) includes light traveling in a first direction and light traveling in a second direction,
light from the second position of the sample (16) includes light traveling in a third direction and light traveling in a fourth direction,
the plurality of photoreceptors (30) include a first photoreceptor, a second photoreceptor, a third photoreceptor, and a fourth photoreceptor, and
the light guide unit (22) guides light from the first position of the sample traveling in the first direction to the first photoreceptor (30), guides light from the first position of the sample traveling in the second direction to the second photoreceptor, guides light from the second position of the sample traveling in the third direction to the third photoreceptor, and guides light from the second position of the sample traveling in the fourth direction to the fourth photoreceptor,
**characterized in that**
a half mirror (44),
which is arranged between the sample (16) and the light guide unit (22), guides light from the light emission unit (40) to the sample (16) and transmits light from the sample (16).

## Patentansprüche

1. Messvorrichtung (10; 11) für optische Eigenschaften, umfassend:
eine Lichtbestrahlungseinheit (12) zum Bestrahlen einer Probe (16) mit Licht, wobei die Lichtbestrahlungseinheit eine Lichtemissionseinheit (40) enthält; und
eine Lichtempfangseinheit (14) zum Empfangen von seitens der Probe reflektiertem Licht,
wobei die Lichtempfangseinheit (14) ein Lichtsensorarray (26) besitzt, das mehrere Fotoempfänger (30) enthält, und eine Lichtleiteinheit (22) enthält, konfiguriert zum Leiten von Licht von der Probe (16) zu unterschiedlichen Fotoempfängern (30) unter den mehreren Fotoempfängern (30) nach Maßgabe der Position und der Laufrichtung des Lichts auf und von der Probe (16),
wobei die Lichtleiteinheit (22) eine Abbildungslinse (25) und mehrere Lichtleitlinsen (28) enthält, von denen die Abbildungslinse (25) konfiguriert ist zum Leiten von Licht von der Probe (16) zu unterschiedlichen Lichtleitlinsen (28) unter den mehreren Lichtleitlinsen (28) entsprechend der Position des Lichts auf der Probe (16) und
jede der mehreren Lichtleitlinsen (28) konfiguriert ist zum Leiten von Licht, das durch die Abbildungslinse (25) geleitet wurde, zu unterschiedlichen Fotoempfängern (30) unter den mehreren Fotoempfängern (30) abhängig von der Position und Laufrichtung von Licht auf und von der Probe (16),
wobei Licht von der Probe (16) Licht von einer ersten Position der Probe (16) und Licht von einer zweiten Position der Probe (16) enthält,
Licht von der ersten Position der Probe (16) Licht enthält, das in einer ersten Richtung läuft, und Licht enthält, das in einer zweiten Richtung läuft,
Licht von der zweiten Position der Probe (16) in einer dritten Richtung laufendes Licht und in einer vierten Richtung laufendes Licht enthält,
die mehreren Fotoempfänger (30) einen ersten Fotoempfänger, einen zweiten Fotoempfänger, einen dritten Fotoempfänger und einen vierten Fotoempfänger enthalten, und
die Lichtleiteinheit (22) konfiguriert ist zum Leiten von Licht von der ersten Position der Probe, das in die erste Richtung läuft, zu dem ersten Fotoempfänger, Licht von der ersten Position der Probe, das in die zweite Richtung läuft, zu dem zweiten Fotoempfänger, Licht von der zweiten Position der Probe, das in die dritte Richtung läuft, zu dem dritten Fotoempfänger, und Licht von der zweiten Position der Probe, das in die vierte Richtung läuft, zu dem vierten Fotoempfänger,
**dadurch gekennzeichnet, dass** die Vorrichtung weiterhin aufweist:
einen Halbspiegel (44), angeordnet zwischen der Probe (16) und der Lichtleiteinheit (22), und konfiguriert zum Leiten von Licht aus der Lichtemissionseinheit (40) zu der Probe (16) und zum Durchlassen von Licht von der Probe (16).

2. Vorrichtung nach Anspruch 1, bei der die Lichtbestrahlungseinheit (12) konfiguriert ist zum Bestrahlen der Probe (16) mit parallelem Licht.

3. Vorrichtung nach Anspruch 2, bei der die Lichtbestrahlungseinheit (12) eine Kollimiereinheit (50) enthält, konfiguriert zum Parallelisieren des Lichts von der Lichtemissionseinheit (40), wobei der Halbspiegel konfiguriert ist zum Leiten des parallelen Lichts zu der Probe (16).

4. Vorrichtung nach einem der Ansprüche 1 bis 3, bei der die Lichtemissionseinheit (40) mehrere Lichtquellen (42) enthält.

5. Vorrichtung nach einem der Ansprüche 1 bis 4, weiterhin enthaltend eine Lichtempfangseinheit für durchgelassenes Licht,
wobei die Lichtempfangseinheit für durchgelassenes Licht ein Lichtsensorarray für durchgelassenes Licht aufweist, enthaltend mehrere Fotoempfänger für durchgelassenes Licht und eine Lichtleiteinheit, konfiguriert zum Leiten von durch die Probe hindurch gelassenem Licht zu verschiedenen Fotoempfängern für durchgelassenes Licht unter den mehreren Fotoempfängern für durchgelassenes Licht, abhängig von der Position und der Laufrichtung des Lichts auf und von der Probe.

6. Vorrichtung nach Anspruch 5, bei der die Lichtempfangseinheit für reflektiertes Licht und die Lichtempfangseinheit für durchgelassenes Licht an Stellen angeordnet sind, die die Probe zwischen sich einschließen.

7. Vorrichtung nach einem der Ansprüche 1 bis 6, weiterhin umfassend:
eine Bildverarbeitungseinheit, konfiguriert zum Ausführen eines Signalprozesses an einem Lichtempfangssignal, welches von jedem der mehreren Fotoempfängern (30) ausgegeben wird.

8. Vorrichtung nach Anspruch 7, bei der die Bildverarbeitungseinheit konfiguriert ist zum Ausführen einer Sortierung des Lichtempfangssignals, das von jedem der mehreren Lichtempfänger ausgegeben wird.

9. Messverfahren für optische Eigenschaften, umfassend:
einen Schritt des Veranlassens einer Lichtabstrahleinheit (12), die eine Lichtemissionseinheit (40) enthält, eine Probe (16) mit Licht zu bestrahlen; und
einen Schritt des Veranlassens einer Lichtempfangseinheit (14), von der Probe reflektiertes Licht zu empfangen,
wobei die Lichtempfangseinheit (14) ein Lichtsensorarray (26) mit mehreren Fotoempfängern (30) und eine Lichtleiteinheit (22), die Licht von der Probe (16) zu dem Lichtsensorarray (26) leitet, enthält, und
die Lichtleiteinheit (22) Licht von der Probe (16) zu unterschiedlichen Fotoempfängern (30) von den mehreren Fotoempfängern (30) abhängig von der Position und der Laufrichtung von Licht auf und von der Probe (16) leitet,
wobei die Lichtleiteinheit (22) eine Abbildungslinse (25) und mehrere Lichtleitlinsen (28) enthält,
die Abbildungslinse (25) Licht von der Probe (16) zu verschiedenen Lichtleitlinsen (28) unter den mehreren Lichtleitlinsen (28) abhängig von der Position des Lichts auf der Probe (16) leitet, und
jede der mehreren Lichtleitlinsen (28) durch die Abbildungslinse (25) geleitetes Licht zu verschiedenen Fotoempfängern (30) von den mehreren Fotoempfängern abhängig von der Position und der Laufrichtung von Licht auf und von der Probe (16) leitet,
wobei Licht von der Probe (16) Licht von einer ersten Position der Probe (16) und Licht von einer zweiten Position der Probe (16) enthält,
Licht von der ersten Position der Probe Licht in einer ersten Richtung laufendes Licht und in einer zweiten Richtung laufendes Licht enthält,
Licht von der zweiten Position der Probe (16) in einer dritten Richtung laufendes Licht und in einer vierten Richtung laufendes Licht enthält,
die mehreren Fotoempfänger (30) einen ersten, einen zweiten, einen dritten und einen vierten Fotoempfänger enthalten, und
die Lichtleiteinheit Licht von der ersten Position der Probe, das in die erste Richtung läuft, zu dem ersten Fotoempfänger (30) leitet, Licht von der ersten Position der Probe, das in der zweiten Richtung läuft, zu dem zweiten Fotoempfänger leitet, Licht von der zweiten Position der Probe, das in die dritte Richtung läuft zu dem dritten Fotoempfänger leitet, und Licht von der zweiten Position der Probe, das in die vierte Richtung läuft, zu dem vierten Fotoempfänger leitet,
**dadurch gekennzeichnet, dass** ein zwischen der Probe (16) und der Lichtleiteinheit (22) angeordneter Halbspiegel (44) Licht von der Lichtemissionseinheit (40) zu der Probe leitet und Licht von der Probe (16) durchlässt.

## Revendications

1. Dispositif de mesure de caractéristique optique (10; 11) comprenant :
une unité d'irradiation de lumière (12) pour irradier un échantillon (16) avec une lumière, l'unité d'irradiation de lumière incluant une unité d'émission de lumière (40), et
une unité de réception de lumière (14) pour recevoir une lumière réfléchie à partir de l'échantillon ;
dans lequel l'unité de réception de lumière (14) présente un réseau de capteurs optiques (26) incluant une pluralité de photorécepteurs (30), et une unité de guidage de lumière (22) configurée pour guider la lumière de l'échantillon (16) vers des photorécepteurs différents (30) parmi la pluralité de photorécepteurs (30) conformément à la position et la direction de déplacement de la lumière sur et à partir de l'échantillon (16) ;
dans lequel l'unité de guidage de lumière (22) présente une lentille d'imagerie (25) et une pluralité de lentilles de guidage de lumière (28) ;
la lentille d'imagerie (25) est configurée pour guider la lumière de l'échantillon (16) vers les différentes lentilles de guidage de lumière (28) parmi la pluralité de lentilles de guidage de lumière (28) conformément à la position de la lumière sur l'échantillon (16), et
chacune de la pluralité de lentilles de guidage de lumière (28) est configurée pour guider la lumière guidée à travers la lentille d'imagerie (25) vers différents photorécepteurs (30) parmi la pluralité de photorécepteurs (30) conformément à la position et la direction de déplacement de la lumière sur et à partir de l'échantillon (16) ;
dans lequel la lumière à partir de l'échantillon (16) inclut une lumière à partir d'une première position de l'échantillon (16) et une lumière à partir d'une seconde position de l'échantillon (16) ;
la lumière à partir de la première position de l'échantillon (16) inclut une lumière se déplaçant dans une première direction et une lumière se déplaçant dans une deuxième direction ;
la lumière à partir de la seconde position de l'échantillon (16) inclut une lumière se déplaçant dans une troisième direction et une lumière se déplaçant dans une quatrième direction ;
la pluralité de photorécepteurs (30) inclut un premier photorécepteur, un deuxième photorécepteur, un troisième photorécepteur, et un quatrième photorécepteur, et
l'unité de guidage de lumière (22) est configurée pour guider la lumière à partir de la première position de l'échantillon se déplaçant dans la première direction vers le premier photorécepteur (30), la lumière à partir de la première position de l'échantillon se déplaçant dans la deuxième direction vers le deuxième photorécepteur, la lumière à partir de la deuxième position de l'échantillon se déplaçant dans la troisième direction vers le troisième photorécepteur, et la lumière à partir de la deuxième position de l'échantillon se déplaçant dans la quatrième direction vers le quatrième photorécepteur ;
**caractérisé en ce que**
le dispositif comprend en outre un miroir semi-réfléchissant (44), lequel est agencé entre l'échantillon (16) et l'unité de guidage de lumière (22) et configuré pour guider la lumière de l'unité d'émission de lumière (40) vers l'échantillon (16) et transmettre la lumière à partir de l'échantillon (16).

2. Dispositif de mesure de caractéristique optique selon la revendication 1,
dans lequel l'unité d'irradiation de lumière (12) est configurée pour irradier l'échantillon (16) avec une lumière parallèle.

3. Dispositif de mesure de caractéristique optique selon la revendication 2,
dans lequel l'unité d'irradiation de lumière (12) inclut une unité de collimation (50) configurée pour faire en sorte que la lumière à partir de l'unité d'émission de lumière (40) soit une lumière parallèle, et
dans lequel ledit miroir semi-réfléchissant (44) est configuré pour guider la lumière parallèle vers l'échantillon (16).

4. Dispositif de mesure de caractéristique optique selon l'une quelconque des revendications 1 à 3,
dans lequel l'unité d'émission de lumière (40) inclut une pluralité de sources de lumière (42).

5. Dispositif de mesure de caractéristique optique selon l'une quelconque des revendications 1 à 4,
dans lequel le dispositif inclut en outre une unité de réception de lumière pour la lumière transmise ;
dans lequel l'unité de réception de lumière pour la lumière transmise présente un réseau de capteurs optiques pour la lumière transmise incluant une pluralité de photorécepteurs pour la lumière transmise, et une unité de guidage de lumière configurée pour guider la lumière transmise à travers l'échantillon vers différents photorécepteurs pour la lumière transmise parmi la pluralité de photorécepteurs pour la lumière transmise conformément à la position et la direction de déplacement de la lumière sur et à partir de l'échantillon.

6. Dispositif de mesure de caractéristique optique selon la revendication 5,
dans lequel l'unité de réception de lumière pour la lumière réfléchie et l'unité de réception de lumière pour la lumière transmise sont agencées en des positions prenant en sandwich l'échantillon.

7. Dispositif de mesure de caractéristique optique selon l'une quelconque des revendications 1 à 6, comprenant en outre :
une unité de traitement d'image configurée pour réaliser un processus relatif au signal sur un signal de réception de lumière produit à partir de chaque photorécepteur de la pluralité de photorécepteurs (30).

8. Dispositif de mesure de caractéristique optique selon la revendication 7,
dans lequel l'unité de traitement d'image est configurée pour réaliser un tri sur le signal de réception de lumière produit à partir de chaque photorécepteur de la pluralité de photorécepteurs.

9. Procédé de mesure de caractéristique optique, comprenant les étapes suivantes :
une étape pour faire en sorte qu'une unité d'irradiation de lumière (12) incluant une unité d'émission de lumière (40) irradie un échantillon (16) avec une lumière, et
une étape pour faire en sorte qu'une unité de réception de lumière (14) reçoive une lumière réfléchie à partir de l'échantillon ;
dans lequel l'unité de réception de lumière (14) présente un réseau de capteurs optiques (26) incluant une pluralité de photorécepteurs (30), et une unité de guidage de lumière (22), laquelle guide la lumière de l'échantillon (16) vers le réseau de capteurs optiques (26), et
l'unité de guidage de lumière (22) guide la lumière de l'échantillon (16) vers des photorécepteurs différents (30) parmi la pluralité de photorécepteurs (30) conformément à la position et la direction de déplacement de la lumière sur et à partir de l'échantillon (16) ;
dans lequel l'unité de guidage de lumière (22) présente une lentille d'imagerie (25) et une pluralité de lentilles de guidage de lumière (28) ;
la lentille d'imagerie (25) guide la lumière de l'échantillon (16) vers les différentes lentilles de guidage de lumière (28) parmi la pluralité de lentilles de guidage de lumière (28) conformément à la position de la lumière sur l'échantillon (16), et
chacune de la pluralité de lentilles de guidage de lumière (28) guide la lumière guidée à travers la lentille d'imagerie (25) vers différents photorécepteurs (30) parmi la pluralité de photorécepteurs conformément à la position et la direction de déplacement de la lumière sur et à partir de l'échantillon (16) ;
dans lequel la lumière à partir de l'échantillon (16) inclut une lumière à partir d'une première position de l'échantillon (16) et une lumière à partir d'une seconde position de l'échantillon (16) ;
la lumière à partir de la première position de l'échantillon (16) inclut une lumière se déplaçant dans une première direction et une lumière se déplaçant dans une deuxième direction ;
la lumière à partir de la seconde position de l'échantillon (16) inclut une lumière se déplaçant dans une troisième direction et une lumière se déplaçant dans une quatrième direction ;
la pluralité de photorécepteurs (30) inclut un premier photorécepteur, un deuxième photorécepteur, un troisième photorécepteur, et un quatrième photorécepteur, et
l'unité de guidage de lumière (22) guide la lumière à partir de la première position de l'échantillon se déplaçant dans la première direction vers le premier photorécepteur (30), guide la lumière à partir de la première position de l'échantillon se déplaçant dans la deuxième direction vers le deuxième photorécepteur, guide la lumière à partir de la deuxième position de l'échantillon se déplaçant dans la troisième direction vers le troisième photorécepteur, et guide la lumière à partir de la deuxième position de l'échantillon se déplaçant dans la quatrième direction vers le quatrième photorécepteur ;
**caractérisé en ce que**
un miroir semi-réfléchissant (44), lequel est agencé entre l'échantillon (16) et l'unité de guidage de lumière (22), guide la lumière de l'unité d'émission de lumière (40) vers l'échantillon (16), et transmet la lumière à partir de l'échantillon (16).
